# FASCICULE DE BREVET EUROPEEN

(11) **EP 0 800 682 B1**
(45) Date de publication et mention de la délivrance du brevet: **18.09.2002**
(21) Numéro de dépôt: 96934937.2
(22) Date de dépôt: 18.10.1996
(51) Int. Cl.: G06K 7/06, G06K 7/00

(54) **LECTEUR DE CARTE A PUCE**
CHIPKARTENLESER
CHIP CARD READER

(30) Priorité: 20.10.1995 FR 9512403
(43) Date de publication de la demande: 15.10.1997
(73) Titulaire: GEMPLUS, 13881 Gémenos Cédex (FR)
(72) Inventeur: PRADEN, Anne-Marie, 13122 Ventabren (FR)
(86) Numéro de dépôt international: FR9601634
(87) Numéro de publication internationale: WO97015895

(56) Documents cités:
- EP-A- 0 202 622
- EP-A- 0 670 556
- ELECTRONIQUE RADIO PLANS, no. 541, Décembre 1992, PARIS,FR, pages 43-47, XP000323501 PATRICK GUEULLE: "Le coupleur de carte à puce CCU 910 COREL"
- ELECTRONIQUE RADIO PLANS, no. 543, Février 1993, PARIS, FR, pages 35-39, XP000332002 PATRICK GUEULLE: "L'interface de cartes à puce TDA8000 PHILIPS"

## Description

L'invention a pour objet un lecteur de carte à puce, notamment un lecteur en relation par des moyens radioélectriques avec des émetteurs d'information. Les lecteurs concernés par l'invention sont cependant, plus généralement, des lecteurs qui doivent assurer une autre mission que celle de servir d'interface à une carte à puce.

Jusqu'à présent les lecteurs sont basés sur une architecture pour laquelle la norme ISO 7816-3 est satisfaite par un logiciel mis en oeuvre par un microprocesseur, dit ici CPU pour simplifier. Cette norme définit le protocole de dialogue entre une carte à puce et le lecteur.

Pour certaines applications en particulier dans le cas où le lecteur reçoit par ailleurs des données à haut débit (information en modulation de fréquence par exemple), le CPU doit. gérer et traiter ces données en temps réel, il peut lui être impossible de dialoguer de plus avec la carte au moment même où il reçoit ces informations.

Dans un exemple, la carte à puce sert à accéder à des services payants, abonnement à des informations routières, abonnement à des radios, abonnement à des programmes de télévision.

Les émetteurs envoyant de telles informations font par ailleurs un contrôle permanent, quasi continu ou aléatoire, arrivant sans que le lecteur ou la carte ne sachent à quel moment se fera le contrôle. Ce contrôle a pour but de vérifier la situation d'abonnement enregistrée dans la carte. De ce fait, le lecteur est amené à dialoguer avec la carte alors qu'il est en réception de données radioélectriques.

Les lecteurs de carte à puce actuels sont réalisés avec un microcontrôleur qui assure en plus la gestion du bit. Cette architecture oblige à s'orienter vers une architecture biprocesseur dès que l'utilisation associée au lecteur nécessite une rapidité d'exécution et de réaction supérieure au temps d'échange du bit, ou de l'octet, avec la carte (procédure calibrée imposée par la norme et donc non interruptible).

Certains composants du commerce, par exemple le circuit ST20-TPI de SGS THOMSON MICROELECTRONIC, intègrent une interface de carte à puce dite SMART CARD qui possède des entrées-sorties complètement commandées par le microprocesseur. Ce genre d'architecture ne permet cependant pas de contrôler l'interface de façon automatique.

Parmi l'état de la technique, on connaît le document « Le coupleur de carte à puce CCU 910 COREL » - Patrick Gueulle (paru dans Electronique Radio Plans, n° 541, Décembre 1992, pages 43-47, XP323501) qui décrit un dispositif destiné assurer la communication entre des cartes à puces et un environnement applicatif.

Le document EP-A-0 670 556 concerne un dispositif portable pour mise en liaison fonctionnelle d'une carte à puce avec une unité centrale.

Le document « L'interface de cartes à puce TDA 8000 . PHILIPS » - Patrick Gueulle (paru dans Electronique Radio Plans, n° 543, Février 1993, pages 35-39, XP332002) décrit quant à lui un lecteur de cartes à puce comportant les caractéristiques du préambule de la revendication 1.

Le but de l'invention est de soulager le microprocesseur CPU de façon intéressante tout en conservant une souplesse pour la mise en oeuvre des différents protocoles possibles de dialogue entre un lecteur et une carte à puce.

La présente invention repose sur une architecture d'un type différent. Elle consiste à faire réaliser par un circuit de couplage toutes les fonctions de la norme 7816-3 qui nécessitent des contraintes de synchronisation et une manipulation des bits, et à gérer de façon logicielle toutes les fonctions de cette norme spécifiques aux différents protocoles.

Dans ce but l'invention a pour objet un lecteur de carte à puce conforme à la revendication 1.

L'invention sera mieux comprise à la lecture de la description qui suit et à l'examen des figures qui l'accompagnent. Les figures montrent:
Figure 1: un lecteur conforme à l'invention.
Figure 2: un organigramme d'actions exécutées par le séquenceur de l'invention.

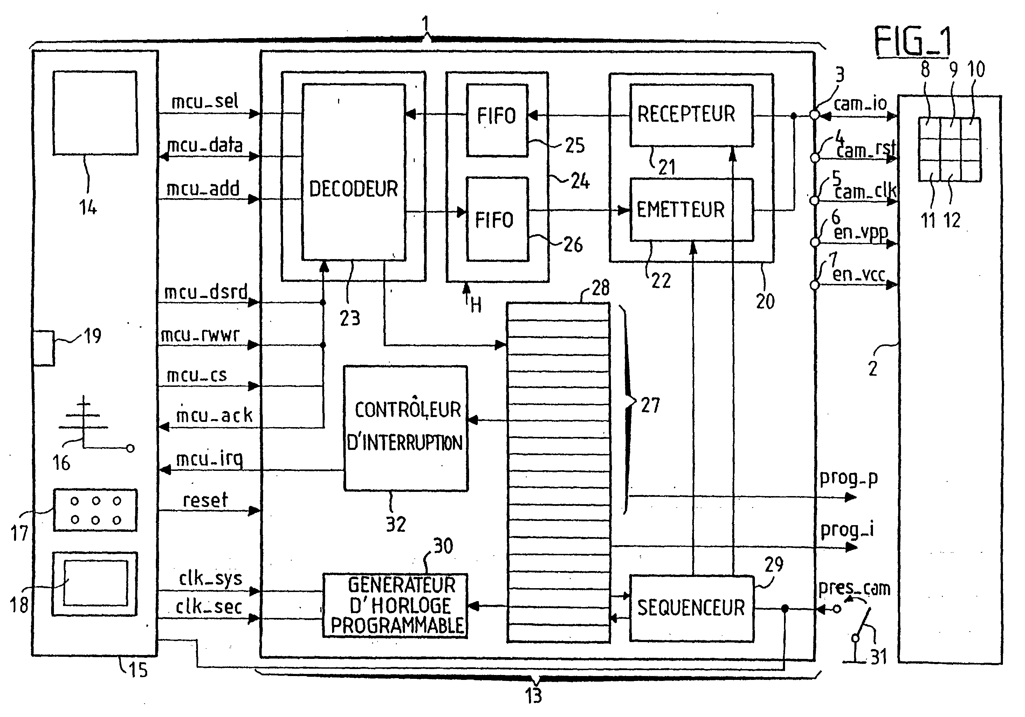

La figure 1 montre un lecteur 1 de carte à puce 2 conforme à l'invention. Le lecteur 1 comporte des plots de contacts tels que 3 à 7 pour entrer en contact avec des plots de contacts correspondant 8 à 12 d'une carte à puce. Le nombre et les positions de ces plots sont prévus par la norme pour que des contacts électriques s'établissent dès que la carte 2 est insérée dans une fente de lecture (non représentée) du lecteur 1. Le lecteur 1 comporte en outre un circuit coupleur 13 pour appliquer ou prélever des signaux électriques sur les plots de contacts. Les signaux électriques sont normalement gérés ou traités par un microprocesseur 14 qui est en relation par ailleurs avec des circuits périphériques au sein d'une unité de traitement 15 du lecteur 1. Les circuits périphériques comportent par exemple une antenne 16 avec son circuit de réception associé et son circuit de communication avec le microprocesseur 14. Ils comportent aussi par exemple un clavier 17 ou un afficheur 18 reliés au microprocesseur 14 dans les mêmes conditions.

D'autres circuits, notamment d'entrée-sortie 19, peuvent permettre au microprocesseur d'entrer en relation avec le monde extérieur, c'est-à-dire extérieur à la carte 2 et au lecteur 1. Tous ces périphériques peuvent intervenir intempestivement lors d'une communication entre le microprocesseur 14 et la carte à puce 2. Il peut s'ensuivre des problèmes de gestion en temps réel de ces interventions.

Le microprocesseur 14 effectue entre autres la réception et/ou le traitement et/ou l'émission des signaux électriques présents dans le circuit coupleur 13.

Dans l'état de la technique, le circuit coupleur 13 est réduit à un ensemble de fils qui conduisent les signaux électriques des plots au microprocesseur 14.

Dans l'invention, le circuit coupleur 13 est notablement plus complexe. Il comporte un premier circuit 20 d'entrée-sortie de données. Le premier circuit 20 comporte un circuit récepteur 21 pour l'entrée et un circuit émetteur 22 pour la sortie. Les deux circuits sont reliés aux plots d'entrée-sortie du lecteur, ici au moins à un plot unique 3 d'entrée sortie de données.

Le circuit coupleur 13 comporte également un deuxième circuit d'entrée-sortie 23 et un jeu 24 de mémoires tampons. Dans un exemple le jeu 24 comporte des mémoires 25 du type premier entré - premier sorti, FIFO, pour recevoir des données en provenance de la carte, et des mémoires 26,du même type, pour émettre des données vers la carte. Le circuit coupleur 13 comporte un jeu 27 de registres tels que 28 de commande, et un séquenceur d'opérations 29.

Le premier circuit d'entrée-sortie 20 est relié d'une part avec les plots de contact, notamment le plot 3, et, d'autre part, avec le jeu des mémoires tampons 24. En pratique, le circuit 21 est relié aux mémoires 25 et le circuit 22 est relié aux mémoires 26. Les circuits 21 22 25 et 26 peuvent être commandés par le séquenceur 29, celui-ci organisant le transfert des informations entre le plot 3 et les mémoires 25, 26. Les mémoires 25, 26 peuvent, par ailleurs, de préférence, avoir un fonctionnement autonome. Un signal d'horloge H produit par un générateur 30 d'horloge programmable, ou par des connexions clk_sys ou clk_sec, reliées au microprocesseur 14, peut dans ce cas cadencer le fonctionnement de ces mémoires 25, 26.

Le deuxième circuit d'entrée-sortie 23 est en relation d'une part avec le microprocesseur 14 et d'autre part avec le jeu 24 des mémoires tampons. De préférence, le deuxième circuit 23 comporte un circuit de décodage, notamment de décodage d'adresse, en relation avec le jeu 27 des registres.

Selon la nature et le temps d'arrivée de certains signaux émis soit par la carte à puce 2 soit par le microprocesseur 14, ces signaux sont décodés par ce circuit décodeur et stockés dans des registres du jeu 27. Le circuit 23 comporte donc un circuit de décodage pour filtrer et décoder ces signaux, un circuit d'adressage pour pointer sur un ou plusieurs des registres du jeu 27 et un circuit d'écriture pour forcer l'état des cellules de ces registres à des états électriques voulus.

On aurait pu faire effectuer ces fonctions d'écriture dans le jeu 27 par le premier circuit d'entrée-sortie 20. Néanmoins, il est préférable de les faire exécuter par le deuxième circuit 23, car le circuit 23 est déjà en relation avec le microprocesseur 14, et, de ce fait, des mêmes circuits d'adressage et d'écriture permettent d'écrire dans des registres du jeu 27 des états électriques imposés non seulement par la carte mais aussi par le séquenceur.

Dans l'invention, le séquenceur 29 commande les circuits d'entrée-sortie, notamment le premier circuit 20, en fonction des états électriques stockés dans le jeu 27 de registres auquel ce séquenceur 29 est relié.

On assimilera aussi par la suite à un registre du jeu 27 de registres un signal disponible sur une connexion pres_cam (pres pour présence et cam pour carte à mémoire ou carte à puce). Cette connexion est reliée d'une part à un interrupteur 31 de type fin de course. Quand-la carte 2 est insérée dans la fente du lecteur 1 elle enfonce l'interrupteur 31 qui en se fermant impose un potentiel (la masse ou un potentiel Vcc) sur la connexion pres_cam. La connexion pres_cam est par ailleurs reliée au séquenceur 29.

Le séquenceur 29 est un circuit séquenceur classique qui produit des signaux de commande en fonction de l'état électrique de certains de ses noeuds. Dans l'invention, ses noeuds sont reliés aux registres du jeu 27 (et aussi à la connexion pres_cam). Le séquenceur 29 peut avoir une évolution autonome ou, de préférence, être cadencé par le signal H vu précédemment.

Une présentation détaillée des divers fonctionnements du lecteur de l'invention concerne les opérations suivantes :
1 Connexion et mise sous tension des contacts.
   A la détection de la présence de la carte, une séquence de mise sous tension automatique de la carte est réalisée par le séquenceur 29. Elle est suivie par une remise à zéro de la carte.
2 Remise à zéro de la carte.
   Le séquencement de remise à zéro de la carte est géré par le séquenceur 29 sans intervention du logiciel associé mis en oeuvre par le microprocesseur 14.
3 Détection des erreurs sur la réponse à la remise à zéro, dite reset.
   La détection des erreurs est automatique par analyse d'un bit de parité et une répétition de la réponse de la carte est commandée automatiquement par le séquenceur-. Si la répétition du caractère n'intervient pas dans les délais requis par la norme, la séquence de remise à zéro est réinitialisée automatiquement.
4 Analyse automatique de la réponse au reset.
   . L'analyse d'un caractère initial reçu dit TS est réalisée automatiquement par le circuit 23;
   . La détection de la fréquence initiale des cartes à horloge interne est ainsi automatique;
   . Le type de convention utilisé pour la polarité des bits (inverse ou direct) est également détecté automatiquement par le circuit 23 pour transmettre au microprocesseur 14 des données dans une convention définie pour lui et lui éviter des manipulations lourdes à gérer sur les bits des octets reçus.
   . Un OU exclusif des octets de la réponse au reset, permettant de connaître la validité de cette réponse, est réalisé automatiquement par le circuit 23. Son résultat est de plus vérifié à la fin de l'échange par le microprocesseur 14.
5 Séquence automatique de mise hors tension des contacts.
   Sur détection du retrait de la carte ou de court-circuit, une séquence automatique de mise hors tension de la carte est réalisée par le séquenceur 29 évitant des court-circuits entre contacts.
6 Contrôle automatique des temps de garde et temps d'attente de caractères ou de blocs.
   Les temps de garde et d'attente de caractère et de bloc sont gérés automatiquement par le séquenceur 29 réduisant les contraintes de synchronisation au niveau du microprocesseur 14.
7 Contrôle automatique de la tension de programmation VPP.
   Une tension de programmation VPP devant être activée dans le temps de garde de l'octet de procédure, une contrainte de temps apparaît. Dans l'invention, cette fonction est réalisée automatiquement dans le circuit coupleur 13.

Dans ce qui suit, on précise les choix de l'invention au regard de la norme 7816-3. On détermine en particulier les parties de cette norme que l'on peut intégrer dans le circuit 13 et les parties qu'il est préférable de laisser exécuter par le microprocesseur 14 avec un logiciel associé.

Ce découpage des taches est fait en ne perdant pas de vue les buts principaux du circuit coupleur 13:
- rendre le microprocesseur 14 indépendant des synchronisations imposées par la carte 2;
- accepter le maximum de types de cartes existant sur le marché.

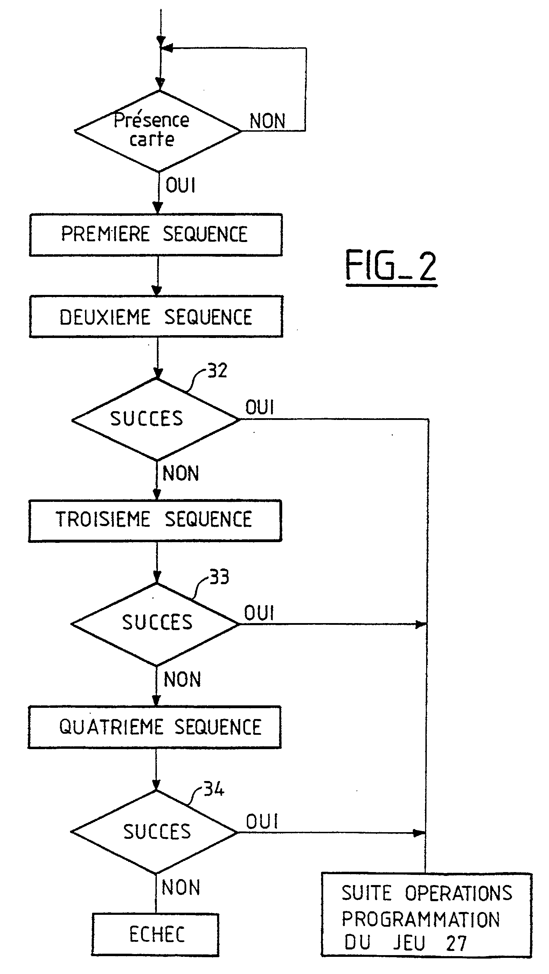

Ces précisions sont apportées, notamment en commentant la figure 2 et en détaillant les procédures opérationnelles pour les diverses cartes à circuits intégrés.

Une procédure générale est applicable à toutes les cartes à circuits intégrés à contacts. Elle spécifie les opérations à réaliser lors d'un dialogue entre le lecteur 1 et la carte 2. Celles-ci sont:
1 connexion et séquence de mise sous tension des plots de contacts du circuit 13;
2 remise à zéro de la carte 2;
3 réponse de la carte 2 à la remise à zéro;
4 échange ultérieur d'informations entre la carte 2 et le circuit 13;
5 séquence de mise hors tension des plots de contacts par le circuit 13.

### 1 Connexion et séquence de mise sous tension des plots de contacts.

Les plots de contacts de la carte ne doivent pas être mis sous tension avant leur connexion au circuit 13. La mise sous tension doit respecter le séquencement suivant:
. plot cam_rst à un état bas, dit L, en pratique la masse dans un exemple;
. plot cam_vcc alimenté à une tension VVC;
. plot cam_io en mode récepteur (récepteur 21 activé, émetteur 22 désactivé);
. plot cam_vpp en repos;
. plot cam_clk débitant un signal d'horloge.

Cette mise sous tension est réalisée par une première séquence induite par le séquenceur 29 dès que la détection de la présence d'une carte se produit sur la connexion pres_cam. Cette mise sous tension sera cependant de préférence commandée par le microprocesseur 14 après lecture du bit de présence carte (image du détecteur de carte). Le circuit 13 se chargera dans tous les cas du séquencement. Dans un cas préféré le microprocesseur 14 donne la main au séquenceur 29 pour effectuer la première séquence vu ci-dessus. En variante, cette première séquence est déclenchée par le séquenceur 29 d'une manière autonome. Dans le cas préféré, le microprocesseur 14 recevant le signal de présence de la carte envoie par l'intermédiaire du circuit 23 un ordre d'écriture, pour écrire dans un registre du jeu 27 une information correspondant à la présence d'une carte. Cette information se transmet naturellement aux noeuds du séquenceur 29 qui sont connectés à ce registre. Et le séquenceur 29 démarre.

### 2 Remise à zéro de la carte

Une fois que cette première séquence est effectuée il faut, en une deuxième une troisième ou une quatrième séquence remettre à zéro la carte. Cette remise à zéro dépend du type de carte auquel on a affaire. Aussi, dans des tests 32 à 34 on va avec le circuit 13 (ou avec le microprocesseur 14), reconnaître le type de la carte qui est introduite. En pratique, on lance une séquence de remise à zéro et on regarde si elle aboutit ou si elle échoue. De préférence donc les tests suivent les deuxième à quatrième séquences.

Il faut distinguer deux types de cartes: les cartes asynchrones et les cartes synchrones.

### 2.1 Cartes asynchrones

Le signal d'horloge est appliqué sur le plot cam_clk à un temps T0 où un signal de remise à zéro, dans un premier temps à l'état L, est appliqué sur le plot cam_rst. Le plot cam_io doit alors se retrouver à un état haute indépendance, dit Z pour simplifier, en moins de 200 cycles d'horloge. Dans cet état ce plot cam_io est capable de recevoir un signal. T2 est le temps après T0 où se terminent ces 200 cycles, T3 est le temps où se terminent 40000 premiers cycles, T1 est le temps où un premier signal apparaît sur le plot cam_io en provenance de la carte.

Là on distingue encore deux types de carte:
- Cartes à remise à zéro interne pour lesquelles la réponse sur le plot cam_io intervient entre 400 et 40000 cycles d'horloge. Le test 32 mesure le fait que la réponse s'est produite pendant les 40000 premiers cycles.
- Cartes à remise à zéro active à l'état bas pour lesquelles le signal sur le plot cam_rst doit être maintenu au départ à l'état L pendant au moins 40000 cycles d'horloge (T3 après T0). Puis le plot cam_rst doit être placé à un état haut, dit H, au temps T3 et la réponse doit intervenir sur le plot cam_io entre 400 et 40000 autres cycles d'horloge qui suivent T3. Le test 33 mesure le fait que la réponse de la carte s'est produite pendant cette troisième séquence.

Si la réponse n'intervient pas, la carte est mise hors tension par le circuit 13.

Ceci est un séquencement dont le séquenceur 29 se charge sur ordre du microprocesseur 14, transmis par le jeu 27 des registres. A l'inverse le circuit 13 délivre un status sur la bonne exécution de l'opération. Ce status est de préférence produit par le circuit de décodage 23. Ce circuit 23, ou éventuellement un autre, stocke la réponse reçue de la carte. Selon la date de réception de la réponse, ou si aucune réponse n'est reçue, la détermination du type de carte est effectuée, le séquenceur provoquant par exemple au cours de ces séquences l'inscription d'information dans les registres du jeu 27. Ainsi, si la carte n'est pas de type asynchrone, le status est négatif, on essaye alors de savoir si elle est de type synchrone.

### 2.2 Cartes synchrones

Le circuit 13 met alors toutes les lignes à l'état L, ainsi
. le plot cam_vcc reste alimenté;
. le plot cam_vpp est au repos;
. les plots cam_clk et cam_rst restent à L;
. les plots cam_io est en mode réception; puis
. le plot cam_rst est mis à H à T0 pendant au moins 50µs (T12);
. le plot cam_clk reçoit une impulsion d'horloge au niveau H après une durée T10 (supérieure à 5µs) après T0. La durée T15 de cette impulsion est de l'ordre de 10 à 50µs mais en respectant une durée T11 entre les fronts descendants sur cam_clk et cam_rst qui est supérieure à 5µs, enfin la réponse arrive sur cam_io lorsque cam_clk est à l'état L. Elle est valide après une durée T13 (inférieure ou égale à 10µs) à partir du front descendant sur cam_rst.

Ceci est un séquencement dont le séquenceur 29 se charge sur ordre du microprocesseur 14, avec également délivrance d'un status sur la bonne exécution de l'opération.

Ces status sont ainsi les résultats des tests entrepris par le circuit 13. Ils peuvent conduire automatiquement à l'exécution des troisièmes ou quatrièmes séquences en cas d'échec de la deuxième séquence ou de la troisième séquence si leur écriture est effectuée directement dans le jeu 27 des registres.

Selon la norme, on peut accepter plusieurs de ces comportements sans donner de priorité à l'un ou l'autre. On pourrait programmer le type de carte que l'on attend de préférence (synchrone ou asynchrone) par le microprocesseur 14 en lui laissant ainsi le choix d'essayer un autre type de remise à zéro si le status indique une erreur de réception.

### 3 Réponse à la remise à zéro

On distingue dans cette partie les deux types de cartes synchrones et asynchrones qui ont été préalablement identifiées.

### 3.1 Cartes asynchrones

### 3.1.1 Définition de l'etu initial

L'etu est la durée nominale d'un bit émis par la carte sur le plot cam_io lors de la réponse au signal présent sur cam_rst. Pour les cartes à horloge interne l'etu initial est 1/9600 seconde (9600 bauds). Pour les cartes à horloge externe, la relation entre etu et la fréquence fi du signal d'horloge CLK est etu = 372/fi secondes. La fréquence fi est en Hz et est comprise entre 1Mhz et 5Mhz. Cette fréquence fi qui va induire la durée de etu est produite par le circuit coupleur 13. Pour éviter des incompatibilités avec certaines cartes et pour être sûr de pouvoir lire la réponse au signal de remise à zéro de toutes les cartes (y compris les cartes T=14 japonaises), il est bon de pouvoir rendre cette fréquence fi programmable par le microprocesseur 14. Ceci est réalisé de préférence dans un générateur d'horloge programmable 30. Le générateur 30 délivre donc le signal présent sur le plot cam_clk. La programmation du générateur 30 est effectuée directement par des connexions clk_sys et clk_sec. Elle aurait aussi pu être provoquée par lecture du jeu 27 des registres.

### 3.1.2 Structure des caractères pendant la remise à zéro.

Un caractère se décompose en 10 bits consécutifs: un bit de début à un état A, 8 bits de données et un dixième bit de contrôle de parité paire (nombre de bit à 1 pair). La durée entre deux caractères est au moins de 12 etu (durée du caractère augmenté d'un temps de garde). Pendant le temps de garde le plot cam_io doit être à Z. Le délai entre deux caractères ne doit pas excéder 9600 etu: temps d'attente initial.

La période d'échantillonnage du signal sur le plot cam_io, lors d'une recherche de début, doit être inférieure à 0,2 etu. Le temps de garde peut être programmable ainsi qu'éventuellement le temps d'attente initial.

### 3.1.3 Détection des erreurs et répétition du caractère

Si une erreur de parité est détectée, le récepteur 21 émet un signal d'erreur en forçant la ligne cam_io à A pendant une durée égale à 1 etu au minimum et à 2 etu au maximum après l'arrivée du bit de parité. Puis le récepteur 21 attend la répétition du caractère. Si la répétition n'a pas lieu le dispositif d'interface doit provoquer la répétition de toute la séquence de remise à zéro. Ceci est à faire avec le circuit 13. Dans ce but le récepteur 21, au besoin par l'intermédiaire du circuit 23, force un registre du jeu 27 dont l'état électrique provoque une séquence d'attente par le séquenceur 29 d'une durée de 9600 etu. Au bout de cette attente si un caractère n'est pas reçu, le séquenceur retourne en 2.1 ci-dessus.

### 3.1.4 Structure et contenu de la réponse au reset

La réponse à la remise à zéro est constituée d'un caractère TS suivi d'au plus 32 caractères dans l'ordre suivant

| | |
|---|---|
| T0 | caractère de format |
| Tai Tbi Tei Tdi | caractères d'interface |
| T1 T2...Tk | caractères historiques |
| TCK | caractère de contrôle |

Les caractères d'interface indiquent les paramètres physiques du circuit intégré dans la carte et les particularités logiques du protocole d'échange qui va suivre. Les caractères historiques donnent des informations générales sur la carte.

Le circuit 13 se contente de transmettre ces caractères au microprocesseur 14 par l'intermédiaire des mémoires tampons 25 (FIFO). L'analyse du contenu des octets correspondant à ces caractères se fait par le microprocesseur 14 qui peut alors procéder à la programmation du circuit 13 en fonction de cette analyse pour procéder à la suite des échanges (programmation d'une fréquence bits fs par exemple).

### 3.1.5 Structure du TS

Le caractère initial TS par contre fournit une séquence de synchronisation au niveau bit et fixe les conventions de codage des octets de données dans tous les caractères ultérieurs. La séquence de synchronisation est AZZA. A est un potentiel actif, à 0 volt ou à Vx selon la convention choisie. Z est un potentiel qui apparaît sur le plot du lecteur quand le plot de sortie de la carte se met à haute impédance et donc ne force pas de signal. Cette séquence permet au circuit 13 de déterminer l'etu initial de la carte (cas des cartes à horloge interne). Il est égal au tiers du délai entre les deux premiers fronts descendants de TS.

Les bits suivants codent le type de convention inverse ou directe: AAA convention inverse, ZZZ convention directe.

L'analyse de ce caractère TS est faite par le circuit 20 ou le circuit 23 du circuit 13. Elle permet de connaître l'etu initial des cartes à horloge interne et de connaître la convention utilisée. Il est possible de transmettre les octets, par l'intermédiaire des mémoires tampons 24, avec la convention fixée par le microprocesseur. Cependant, pour lui éviter des manipulations de bits qui sont parfois lourdes à gérer, il suffit, en fonction de la convention utilisée par la carte et détectée dans le caractère TS, de faire sur les octets reçus, la translation adéquate.

### 3.1.6 Structure de TO

Le quartet de poids fort appelé Y1 indique la présence des caractères d'interface TA1 TB1 TC1 TD1.

Le quartet de poids faible appelé K indique le nombre de caractères historiques.

L'analyse de ces quartets est faite par le microprocesseur 14.

### 3.1.7 Structure des caractères d'interface

Ils indiquent des paramètres du protocole et la présence des autres caractères d'interface:
- TDi indique le type de protocole sur son quartet de poids faible et la présence des paramètres d'interface i+1 sur son quartet de poids fort.
- TA1 TB1 TC1 TB2 sont les octets globaux qui doivent être analysés pour traiter correctement le protocole de transmission;
- Les autres octets d'interface Tai Tbi Tci sont les octets spécifiques d'interface;
- TA1 code le paramètre F sur le poids fort et D sur le poids faible. TB1 code I sur les bits b7 et b6 et P1 sur les 5 bits de poids faibles;
- TC1 code N;
- TB2 code P2;
- F et D sont utilisés pour déterminer l'etu de travail (F facteur de conversion de l'horloge, D facteur d'ajustement du débit binaire).

Pour les cartes à horloge interne l'etu de travail vaut 1/D*9600 en secondes.

Pour les cartes à horloge externe l'etu de travail vaut F/D*fs en secondes.

fs a une valeur minimum de 1MHz et une valeur maximum déterminée par F.

I et P définissent l'état actif de VPP: courant maximal d'écriture Ipp=ImA, tension d'écriture Vpp=pV.

N est le temps de garde supplémentaire requis par la carte. Avant de recevoir un caractère, la carte requiert un délai d'au moins 12+N etu à partir du front initial du caractère précédent. On utilise aucun temps de garde supplémentaire pour émettre des caractères de la carte vers le dispositif d'interface.

Tous ces caractères sont analysés par le microprocesseur 14 et le résultat de l'analyse est utilisé pour programmer le circuit 13.

### 3.1.8 Structure des caractères historiques

Ils sont traités par le microprocesseur 14.

### 3.1.9 Structure de TCK

La valeur de TCK doit être telle que le OU exclusif de tous les octets de T0 à TCK compris soit nul. Cette vérification peut être faite par le circuit 13 en mettant le résultat du OU exclusif dans un registre du jeu 27 pour chaque réception d'octet. Le microprocesseur vient ensuite lire ce registre à la fin de la réponse au reset. Ceci permet de vérifier le fonctionnement du circuit 13. Le calcul du OU exclusif est réinitialisé à chaque remise à zéro de la carte.

### 3.2 Cartes synchrones

### 3.2.1 Débit binaire

La relation entre le débit binaire et la fréquence fi d'horloge sur le plot cam_clk est etu = 1/fi en seconde, avec fi compris entre 7KHz et 50 KHz.

### 3.2.2 Structure de l'entête

La réponse de la carte contient un entête de 32 bits. Les deux premiers octets sont H1 et H2.

### 3.2.3 Séquencement de l'entête

La sortie des données est commandée par des impulsions d'horloge. La première impulsion commence à un temps T14 (10µs < T14 < 100µs) après le front descendant sur cam_rst. L'état haut de l'impulsion de l'horloge dure une durée T15 (10µs < T15 < 50µs) et l'état bas une durée T16 (10µs < T16 < 100µs). Les bits de données peuvent être échantillonnés sur les fronts montants de l'horloge.

### 3.2.4 Contenu de l'entête

1 code de type de protocole; H2 code des paramètres qui dépendent du type de protocole.

La mise en oeuvre du séquencement de l'entête avec le circuit 13 ne pose aucun problème. Les 4 octets seront rangés en mémoires tampons, FIFO, et analysés par le microprocesseur 14 qui vérifie la comptabilité des protocoles utilisés par la carte et par le circuit 13, et demande au circuit 13 une mise en hors tension des contacts si cette compatibilité n'est pas possible.

### 4 Echange ultérieur d'informations, analyse des divers protocoles

### 4.1 Protocole T = 0

Le délai d'attente de travail entre le front initial d'un caractère émis par la carte et le front initial du caractère précédent (émis par la carte ou par le circuit 13) ne doit pas dépasser 960 * D * WI etu de travail. Cette valeur maximale est appelée temps d'attente de travail. D et WI sont codés dans la réponse à la remise à zéro. Par défaut WI vaut 10.

Ce temps d'attente de travail va constituer une limite d'attente de caractère dans le circuit 13. Il sera programmé par le microcontrôleur après la validation du protocole à utiliser.

Le dispositif d'interface est normalement maître dans l'émission des commandes. Celles-ci sont constituées d'un entête de 5 octets et d'octets de données qui sont émis sous contrôle des octets de procédure émis par la carte. La procédure de détection d'erreur et de répétition de caractères est la même que pour la réponse à la remise à zéro. Elle est obligatoire.

### 4.1.3 En tête de commande émis par la dispositif d'interface de l'invention.

Le circuit 13 émet un entête sur 5 octets CLA, INS, P1, P2, P3. Le circuit 13 doit attendre les octets de procédure. Ces 5 octets sont placés dans la mémoire tampon du circuit 13 par la microprocesseur 14 et envoyés par le circuit 13 à la carte suivant le protocole programmé. Le sens de transfert des informations est connu par le microprocesseur grâce à INS.

### 4.1.4 Octets de procédure émis par la carte

- Les octets de procédure émis par la carte sont
   * ACK: commande du VPP et échange des données;
   * NUL: pour relancer le temps d'attente de travail, pas d'action sur VPP ou sur les données;
   * SW1 suivi de SW2: VPP à l'état de repos et termine l'échange.
- La transition de VPP doit se produire dans le temps de garde de l'octet de procédure ou dès dépassement du temps de travail.

Le circuit 13 va relancer sur chaque réception d'octet une attente limite de correction constituée par le temps d'attente de travail (quelle que soit la valeur de l'octet de procédure reçu) et mémoriser l'octet dans la mémoire tampon 24. Le microprocesseur 14 analyse le contenu de l'octet pour savoir si l'échange doit se poursuivre, s'il doit attendre, ou si l'échange est terminé. Pour activer le VPP un minimum d'analyse doit être fait sur l'octet reçu. Le microprocesseur 14 doit vérifier si l'octet de procédure commande VPP actif ou non. VPP sera actif si OCTET=(INS+1) ou (COMPL (INS+1) ou (VPP actif et 60). Pour toutes les autres valeurs VPP doit être mis au repos. La norme n'indique pas s'il y a un délai à respecter dans l'émission des données par le dispositif d'interface après réception de l'octet ACK. On sait simplement que la carte doit, elle, répondre dans le délai du temps d'attente de travail. On peut donc laisser au microprocesseur 14 l'initiative de l'émission des données et par conséquent limiter de ce point de vue les opérations faites par le circuit 13.

### 4.2. Protocole T=1

Pour ce protocole une notion de bloc est rajoutée. Il est organisé en 3 couches:
* couche physique qui suit les caractéristiques définies précédemment;
* couche de liaison de données qui définit une composante caractère et une composante bloc. La composante caractère est identique à celle vue précédemment, à la détection et répétition d'erreur près. La composante bloc est définie par ce protocole;
* couche application qui traite les commande et l'échange des blocs ou chaîne de blocs.

Comme dans le protocole T=0 un temps d'attente de caractère est défini. Il a été rajouté un temps d'attente de bloc. Le temps d'attente de bloc est défini par le temps maximal écoulé entre le front initial du dernier caractère octroyant un autorisation d'émission à la carte et celui du premier caractère émis par la carte.

Le temps de garde de bloc est similaire au temps de garde de caractère défini plus haut. Le temps de garde de bloc est le temps minimal écoulé entre le front initial d'un caractère et celui du caractère qui suit dans la direction opposée.

Tous ces temps sont programmés dans le circuit 13 par écritures adéquates dans le jeu 27 de registre. Ces écritures sont effectuées par le microprocesseur 14 et prises en compte par le séquenceur 29.

L'état de VPP est contrôlé par la réponse de la carte dans l'octet d'adresse de noeud NAD et le caractère PCB qui suit. Toute transition de VPP doit intervenir dans un délai de 12 etu calculé à partir du front initial du caractère qui a déclenché ce VPP. L'analyse du caractère NAD doit donc se faire au vol, sans l'intervention du microprocesseur 14, pour l'activation de VPP.

### 5 Séquence de mise en hors tension des contacts.

Lorsque l'échange d'information est terminé ou suspendu (carte muette ou détection du retrait de la carte), les contacts électriques doivent être mis hors tension suivant le séquencement qui suit:
. plot cam_rst à L;
. plot cam_clk à L;
. plot cam_vpp hors tension;
. plot cam_io à A;
. plot cam_vcc hors tension;

Ceci est intégré dans le circuit 13. La réaction est immédiate lors de l'arrachage de la carte et évite les courts-circuits entre contacts.

### 6 Sélection du type de protocole PTS

Cet échange entre le lecteur 1 et la carte 2 permet de fixer le protocole et ses paramètres pour les échanges ultérieurs. La réponse au reset indique au lecteur le ou les protocoles supportés par la carte. Si plusieurs protocoles sont possibles un PTS est envoyé par le lecteur à la carte pour fixer le protocole.

### Séquencement:

- Le lecteur émet une demande de PTS;
- La carte répond par une confirmation sinon le temps d'attente initial est dépassé;
- Si l'échange de demande de PTS est satisfaisant les données peuvent suivre;
- Lorsqu'une erreur est détectée, le lecteur fait une remise à zéro e la carte ou la rejette;

### Structure et contenu du PTS:

demande et confirmation: 1 caractère initial PTSS - 1 caractère de format PTSO - 3 caractères optionnels de paramètres PTS1 PTS2 PTS3 - 1 caractère de contrôle.
Le microprocesseur 14 écrit sa demande de PTS dans la mémoire tampon 26 du circuit 13 qui l'envoie et vérifie si la réponse arrive dans le délai d'attente initial. Le circuit 13 transmet ensuite le OU exclusif des octets au microprocesseur 14 qui vérifiera la validité de la réponse. Si la réponse n'est pas correcte, ce dernier prendra l'initiative de la remise à zéro de la carte. Après un échange réussi de PTS, le microprocesseur pourra programmer le circuit 13 pour les échanges ultérieurs.

Les tableaux suivants décrivent respectivement:
- Tableau 1: les types de signaux échangés sur les deux circuits d'entrée sortie 20 et 23, I signifiant entrée dans le lecteur et O signifiant sortie du lecteur;
- Tableaux 2 et 3: les noms des registres du jeu 27, le type de registre en L lecture ou E écriture, le contenu en octets des cellules D7 à D0 de ces registres (les noms indiqués renvoient à la norme ISO), et les fonctions de ces registres et octets.

**TABLEAU 1**

| nom signal | type | fonction |
|---|---|---|
| côté CPU 14 | | |
| MCU_SEL | I | sélection type microcontrôleur Motorola/Intel |
| MCU_CS | I | chip select du module: sélection du circuit 13 |
| MCU_DSRD | I | data strobe ou read enable (fonction de MCU_SEL) |
| MCU_RWWR | I | read-write ou write enable (fonction de MU_SEL) |
| MCU_ACK | O | wait ou acknowledge (fonction de MCU_SEL) |
| MCU_IRQ | O | interruption |
| MCU_ADD(4:0) | I | adresses |
| MCU_DAT(7:0) | I | données |

| signaux généraux | | |
|---|---|---|
| RESET | I | reset général |
| CLK_SYS | I | horloge du système |
| CLK_SEC | I | horloge secondaire |

| côté carte à puce | | |
|---|---|---|
| PRES_CAM | I | présence carte |
| CAM_I/O | I/O | I/O carte à mémoire |
| CAM_RST | O | reset carte à mémoire |
| CAM_CLK | O | horloge carte à mémoire |
| EN_VPP | O | activation de VPP |
| EN_VCC | O | activation de VCC |
| PROG_I | O | programmation du courant IPP |
| PROG_P | O | programmation de la tension VPP |

**TABLEAU 2**

| Nom | type | D7 | D6 | D5 | D4 | D3 | D2 | D1 | D0 |
|---|---|---|---|---|---|---|---|---|---|
| PROTO | L/E | AS/S Y | HI | RC | CP | TP3 | TP2 | TP1 | TP0 |
| FRQ_INI | L/E | FI7 | FI6 | FI5 | FI4 | FI3 | FI2 | FI1 | FI0 |
| FREQ_T RV | L/E | FT7 | FT6 | FT5 | FT4 | FT3 | FT2 | FT1 | FT0 |
| MODE | L/E | SEL _OS C | IT | VPP | TR1 | TR0 | RST | PO N | POF F |
| EXE | E | RES ET | CH GT_ FR | RE | EM | | RST | PO N | POF F |
| CWT | L/E | CW T7 | CW T6 | CW T5 | CW T4 | CW T3 | CW T2 | CW T1 | CW T0 |
| CGT | L/E | CG T7 | CG T6 | CG T5 | CG T4 | CG T3 | CG T2 | CG T1 | CG T0 |
| BWT | L/E | BW T7 | BW T6 | BW T5 | BW T4 | BW T3 | BW T2 | BW T1 | BW T0 |
| BGT | L/E | BG T7 | BG T6 | BG T5 | BG T4 | BG T3 | BG T2 | BG T1 | BG T0 |
| I/P | L/E | 0 | I2 | I1 | I0 | P3 | P2 | P1 | P0 |
| MASK_1 T | L/E | AR C | | FEE | FRF | OC T | TO B | TO C | TO R |
| FIFO_EM | E | D7 | D6 | D5 | D4 | D3 | D2 | D1 | D0 |
| MANUEL | E | | | | VC C | VPP | RST | CLK | I/O |
| STATUS | L | | | ER_ PAR | viol BG T | viol BW T | viol CG T | viol CW T | To_r st |
| OU_EX | L | CK7 | CK6 | CKS | CK4 | CK3 | CK2 | CK1 | CK0 |
| STATUS IT | 1 | AR C | | FEE | FRF | OC T | TO B | TO C | TO R |
| FIFO_RE | L | D7 | D6 | D5 | D4 | D3 | D2 | D1 | D0 |

**TABLEAU 3**

| Nom | def | Fonction |
|---|---|---|
| PROTO | 0 | TP3.0: code le protocole |
| | 1 | CP: contrôle parité (1) |
| | 0 | RC: répétition caractère (1) |
| | 1 | HI: horloge interne (1) |
| | 0 | AS/SY: carte asynchrone (0)/ Synchrone (1) |
| FRQ_INI | | code la fréquence sur CLK pour la remise à zéro |
| FREQ_TRV | | code la fréquence sur CLK pour les échanges ultérieurs |
| MODE | | POFF: mise hors tension automatique des contacts à l'arrachage |
| | | PON: mise sous tension automatique des contacts lors de l'insertion carte |
| | | RST: remise à zéro automatique de la carte après une mise sous tension |
| | | TRO: transposition automatique des données avant mémorisation |
| | | TR1: type de codage des données en fifo direct (0) inverse (1) |
| | | VPP: contrôle du VPP sortit de EN_VPP |
| | | IT: génération de l'it |
| | | SEL_OSC: sélection de l'oscillateur CLK_SYS ou CLK_SEC |
| EXE | | Commande l'exécution d'une action sur la carte en écriture uniquement. |
| | | Les bits sont remis à zéro dès la prise en compte par le circuit 13 |
| | | POFF: séquence de mise hors tension des contacts |
| | | PON: séquence de mise sous tension des contacts |
| | | RST: séquence de remise à zéro |
| | | EM: émission des octets contenus dans la FIFO |
| | | RE: force la mise en haute impédance de CAM_IO et bascule en mode réception de caractères |
| | | CHGT_FR: commande la commutation de la fréquence initiale à travail |
| | | RESET: reset logiciel du circuit 13 |
| CWT | | Programmation du temps d'attente de caractère. Avant la remise à zéro ce sera le temps d'attente initial. Après de sera le temps d'attente de travail |
| CGT | | Programmation du temps de garde entre caractère équivalent au N de la réponse au reset |
| BWT | | Programmation du temps d'attente de bloc |
| BGT | | Programmation du temps de garde entre bloc |
| I/P | | Programmation de I et de P |
| MASK_1 T | | masque des its |
| | | TOR: timeout du reset |
| | | TOC: timeout caractère |
| | | TOB: timeout bloc |
| | | OCT: présence d'un octet dans la fifo |
| | | réception |
| | | FRF: FIFO réception full |
| | | FEE: fifo émission empty |
| | | ARC: arrachage carte |
| FIFO_EM | | octet à émettre |
| MANUEL | | programmation manuelle des contacts |
| STATUS | | status de l'échange |
| OU_EX | | ou exclusif sur les octets reçus |
| STATUS IT | | Statuts de l'it permet de savoir ce qui a généré l'it |
| FIFO_RE | | octets reçus |

Enfin, compte tenu de problèmes pouvant survenir dans le circuit 13 au moment où il lit la carte, le circuit 13 comporte de plus un circuit 32 de contrôle d'interruption permettant d'arrêter ou de prévenir le microprocesseur 14 de la nécessité d'une action urgente. Le circuit 32 reçoit son information du jeu 27, et selon la nature de celle-ci émet ou non un signal d'interruption.

## Revendications

1. Lecteur (1) de carte à puce comportant:
- des plots (3-7) de contacts pour entrer en contact avec des plots (8-12) de contact d'une carte à puce (2);
- un circuit coupleur (13) pour appliquer ou prélever des signaux électriques sur les plots (3-7) de contacts du lecteur;
- un microprocesseur (14) pour effectuer la réception et ou le traitement et ou l'émission de ces signaux disponibles dans le circuit coupleur;
- un séquenceur (29) d'opération;
**caractérisé en ce que** le circuit coupleur comporte :
- un premier circuit (20) d'entrée sortie;
- un jeu (24) de mémoires tampons;
- un deuxième circuit (23) d'entrée sortie;
- un jeu (27) de registre (28) de commande;
- le premier circuit (20) d'entrée sortie étant en relation d'une part avec les plots (3-7) de contact du lecteur (1) et d'autre part avec le jeu (24) des mémoires tampons;
- le deuxième circuit (23) d'entrée sortie étant en relation d'une part avec le microprocesseur (14) et d'autre part avec le jeu des mémoires tampons (24);
- le deuxième ou le premier circuit comportant un circuit de décodage relié au jeu (27) de registres;
- le séquenceur (29) commandant les circuits d'entrée sortie en fonction d'états électriques stockés dans les registres du jeu de registres,
- le circuit coupleur (13) étant apte à rendre le microprocesseur (14) indépendant des synchronisations imposées par la carte (2).

2. Lecteur selon la revendication 1, **caractérisé en ce que** le circuit coupleur (13) comporte une entrée de commande pour recevoir un signal de présence d'une carte à puce dans le lecteur et pour déclencher une première séquence dite de mise à zéro par le séquenceur.

3. Lecteur selon la revendication 2, **caractérisé en ce que** le premier ou le deuxième circuit d'entrée sortie comporte un circuit pour mesurer temporellement l'évolution des états électriques sur les plots de lecteur au cours de la première séquence.

4. Lecteur selon la revendication 2, **caractérisé en ce que** le deuxième circuit d'entrée sortie comporte un circuit pour écrire des états électriques dans les registres du jeu de registre au cours d'une deuxième séquence suivant la première séquence.

5. Lecteur selon l'une des revendications 1 à 4, **caractérisé en ce que** le deuxième circuit d'entrée sortie comporte un circuit pour transmettre des états électriques du microprocesseur à des registres du jeu de registre.

6. Lecteur selon l'une des revendications 1 à 5, **caractérisé en ce que** le circuit coupleur (13) comporte:
- une horloge programmable,
- un circuit de maintien pendant une durée donnée d'un potentiel sur un des plots du lecteur.

7. Lecteur selon l'une des revendications 1 à 4 **caractérisé en ce que** le circuit coupleur (13) comporte un circuit d'interruption (32) pour envoyer un signal d'interruption au microprocesseur (14).

## Patentansprüche

1. Lesegerät (1) für Chipkarten, mit:
- Kontaktplots (3 - 7) zum Kontaktieren der Kontaktplots (8 - 12) einer Chipkarte (2);
- einem Kopplungsschaltkreis (13) zur Anwendung oder Entnahme von elektrischen Signalen auf / von den Kontaktplots (3 - 7) des Lesegeräts;
- einem Mikroprozessor (14) zum Empfang oder der Verarbeitung und / oder der Ausgabe dieser im Kopplungsschaltkreis verfügbaren Signale;
- einem Betriebsbefehlsgeber (29);
**dadurch gekennzeichnet, dass** der Kopplungsschaltkreis umfasst:
- einen ersten Eingangs- / Ausgangs-Schalkreis (20);
- einen Satz (24) Pufferspeicher;
- einen zweiten Eingangs- / Ausgangs-Schaltkreis (23);
- einen Satz(27) Steuerregister (28);
- wobei der erste Eingangs- / Ausgangs-Schaltkreis (20) einerseits in Verbindung mit den Kontaktplots (3 - 7) des Lesegeräts (1) und andererseits mit dem Satz (24) der Pufferspeicher stehen;
- wobei der zweite Eingangs- / Ausgangsschaltkreis (23) einerseits in Verbindung mit dem Mikroprozessor (14) und andererseits mit dem Satz Pufferspeicher (24) steht;
- wobei der zweite oder der erste Schaltkreis einen mit dem Registersatz (27) verbundenen Decodierungsschaltkreis umfasst;
- wobei der Befehlsgeber (29) die Eingangs- /Ausgangs-Schaltkreise in Abhängigkeit von den in den Registern des Registersatzes gespeicherten elektrischen Zuständen steuert,
- wobei der Kopplungsschaltkreis (13) geeignet ist, den Mikroprozessor (14) unabhängig von den durch die Karte (2) auferlegten Synchronisierungen zu machen.

2. Lesegerät gemäß Anspruch 1, **dadurch gekennzeichnet, dass** der Kopplungsschaltkreis (13) einen Steuereingang beinhaltet, um ein Präsenzsignal einer Chipkarte im Lesegerät zu empfangen und um eine erste, sogenannte Nulleinstellungssequenz für den Befehlsgeber auszulösen.

3. Lesegerät gemäß Anspruch 2, **dadurch gekennzeichnet, dass** der erste oder zweite Eingangs- / Ausgangs-Schaltkreis einen Schaltkreis beinhaltet, um zeitweise die Entwicklung der elektrischen Zustände auf den Plots des Lesegeräts im Verlauf der ersten Sequenz zu messen.

4. Lesegerät gemäß Anspruch 2, **dadurch gekennzeichnet, dass** der zweite Eingangs- / Ausgangs-Schaltkreis einen Schaltkreis zum Schreiben der elektrischen Zustände in den Registern des Registersatzes im Verlauf einer zweiten Sequenz im Anschluss an die erste Sequenz beinhaltet.

5. Lesegerät gemäß Anspruch 1 bis 4, **dadurch gekennzeichnet, dass** der zweite Eingangs- / Ausgangs-Schaltkreis einen Schaltkreis zum Übertragen der elektrischen Zustände des Mikroprozessors auf die Register des Registersatzes beinhaltet.

6. Lesegerät gemäß Anspruch 1 bis 5, **dadurch gekennzeichnet, dass** der Kopplungsschaltkreis (13) beinhaltet:
- eine programmierbare Zeituhr,
- einen Schaltkreis zur Aufrechterhaltung eines Potenzials auf einem der Plots des Lesegeräts während einer vorgegebenen Dauer.

7. Lesegerät gemäß Anspruch 1 bis 4, **dadurch gekennzeichnet, dass** der Kopplungsschaltschaltkreis (13) einen Abschaltungsschaltkreis (32) zum Versenden eines Abschaltungssignals an den Mikroprozessor (14) beinhaltet.

## Claims

1. A smart card reader (1) including:
- contact tabs (3-7) for coming into contact with the contact tabs (8-12) of a smart card (2);
- a coupler circuit (13) for applying electrical signals to the contact tabs (3-7) of the reader or for picking up such signals therefrom;
- a microprocessor (14) for receiving and/or processing and/or transmitting said signals as available in the coupler circuit; and
- an operations sequencer (29);
said reader being **characterized in that** the coupler circuit comprises:
- a first input-output circuit (20);
- a set (24) of buffer memories;
- a second input-output circuit (23); and
- a set (27) of command registers (28);
the first input-output circuit (20) being in communication firstly with the contact tabs (3-7) of the reader (1) and secondly with the set (24) of buffer memories;
the second input-output circuit (23) being in communication firstly with the microprocessor (14) and secondly with the set of buffer memories (24);
the second or the first circuit including a decoding circuit connected to the set (27) of registers;
the sequencer (29) controlling the input-output circuits as a function of electrical states stored in the registers of the set of registers; and
the coupler circuit (13) being suitable for making the microprocessor (14) independent from the synchronizations imposed by the card (2).

2. A reader according to claim 1, **characterized in that** the coupler circuit (13) includes a control input for receiving a signal indicating the presence of a smart card in the reader, and for triggering a "reset" first sequence by the sequencer.

3. A reader according to claim 2, **characterized in that** the first or the second input/output circuit includes a circuit for measuring, in time, the progress of the electrical states on the reader contact tabs during the first sequence.

4. A reader according to claim 2, **characterized in that** the second input-output circuit includes a circuit for writing the electrical states in the registers of the set of registers during a second sequence following the first sequence.

5. A reader according to any one of claims 1 to 4, **characterized in that** the second input-output circuit includes a circuit for transmitting electrical states from the microprocessor to registers of the set of registers.

6. A reader according to any one of claims 1 to 5, **characterized in that** the coupler circuit (13) includes:
- a programmable clock; and
- a circuit for maintaining a potential on one of the tabs of the reader for a given duration.

7. A reader according to any one of claims 1 to 4, **characterized in that** the coupler circuit (13) includes an interrupt circuit (32) for sending an interrupt signal to the microprocessor (14).
